# EUROPEAN PATENT APPLICATION

(11) **EP 2 806 318 A1**
(43) Date of publication of application: **26.11.2014**
(21) Application number: 14167059.6
(22) Date of filing: 05.05.2014
(51) Int. Cl.: G05B 19/042, G06F 11/07, G06F 11/30, G05B 19/05

(54) **Method for storing data**

(30) Priority: 20.05.2013 KR 20130056362
(71) Applicant: LSIS Co., Ltd., Anyang-si, Gyeonggi-do 431-848 (KR)
(72) Inventor: Kim, Seung Jong, 365-807 Chungcheongbuk-Do (KR)
(74) Representative: Groth & Co. KB

(57) **Abstract**

A method for storing data is disclosed, the method including collecting, by a CPU module, a source data and an RTC (Real Time Clock) value and storing the source data and the RTC value in a common RAM (Random Access Memory) of a data log module, converting, by an MPU (Micro Processing Unit) of the data log module, a type of the source data, and adding the RTC value and an index value to the converted value to generate a data row, and compressing, by a compression unit of the data log module, the generated data row, and storing the generated compressed data row in a memory card.

## Description

### BACKGROUND OF THE DISCLOSURE

### Field of Endeavor

The present disclosure relates to a method for storing data.

### Background

Automation facilities at a traditional industrial site include mechanical devices such as a relay and the like. There is a difficulty in replacing wirings, each at a time, of an inner circuit in the automation facilities in order to change functions of the automation facilities configured with mechanical devices.

To solve the difficulties, a programmable logic controller (PLC) is typically employed. The PLC includes a plurality of analog and digital inputs and at least a number of digital outputs. That is, the PLC generally includes a basic module and a wide variety of expansion modules. The PLC is largely controlled in an unmanned manner, and therefore, *ex post facto* measures must be taken to solve an abnormal operation if it is generated. A series of operations may be monitored or a log data of past history may be stored to check if and how the abnormal operation has been generated.

To this end, a CPU (Central Processing Unit) module of a PLC system collects source data in response to a predetermined parameter and storage condition. The source data collected by the CPU module is converted by a data log module to a data of predetermined type to generate a data row by adding an RTC (Real Time Clock) value and an index value, whereby the generated data row is stored in a memory card.

However, the data log module suffers disadvantages in that the data row is stored in the memory card as it is, and therefore there is a limit in storing a large capacity of data row in a limited capacity of memory card.

### SUMMARY OF THE DISCLOSURE

The present disclosure has been made to solve the foregoing problems of the prior art and therefore an object of certain embodiments of the present invention is to provide a method for storing data (hereinafter referred to as "data storing method", or more briefly to "method") configured to store a large capacity of data row in a limited memory by compressing and storing the data row in the memory when a data log module stores the data row in the memory.

Another object is to provide a data storing method configured to enhance a storing speed of a data row by compressing and reducing the data row.

In one general aspect of the present disclosure, there is provided a data storing method, the method comprising:
Collecting, by a CPU (Central Processing Unit) module, a source data and an RTC (Real Time Clock) value and storing the source data and the RTC value in a common RAM (Random Access Memory) of a data log module;
converting, by an MPU (Micro Processing Unit) of the data log module, a type of the source data, and adding the RTC value and an index value to the converted value to generate a data row; and
compressing, by a compression unit of the data log module, the generated data row, and storing the generated compressed data row in a memory card.

Preferably, but not necessarily, the data storing method may further comprise inputting a ladder program through an input unit and setting a parameter and a storing condition prior to storing the data log module in the common RAM, wherein the CPU module, at the step of storing at the common RAM of the data log module, collects a source data and an RTC value satisfying the parameter and the storing condition.

Preferably, but not necessarily, the step of storing the generated compressed data row in the memory card may include storing the generated data row in a buffer, and storing in the memory card by allowing the compression unit to compress the data row stored in the buffer.

Preferably, but not necessarily, the method may further comprise setting whether to compress through the input unit, prior to the step of storing in the common RAM of the data log module, wherein the compression unit determines setting of whether to compress at the step of storing in the memory card, and stores in the memory card by compressing the data row when the compression is set.

Preferably, but not necessarily, the step of storing in the memory card may include generating a Huffman Tree using the data row according to Huffman coding method, generating a compression code by selectively providing 0 or 1 to a left branch and a right branch of the generated Huffman tree, and storing the compressed code in the memory card.

Preferably, but not necessarily, the step of generating the Huffman tree may include checking the frequency number of each data row based on the data row and calculating probability values as a result of the checking, comparing the probability values of samples of the calculated data row, and repeating the processes of generating a new node by comparing a probability value of the newly generated node with probability values of samples in remaining data rows and adding the two smallest probability values in size as a result of the comparison.

### ADVANTAGEOUS EFFECTS

The data storing method according to the present disclosure has an advantageous effect in that storage of compressed data row in the memory card is performed based on compression setting when the data row is stored in the memory card, whereby a large capacity of data rows can be stored in a limited capacity of memory card, and a storing speed of data rows can be enhanced by compression of data rows.

### BRIEF DESCRIPTION OF THE DRAWINGS

FIG. 1 is a block diagram illustrating a data storing method according to prior art.
FIG. 2 is a signal flowchart illustrating an operation of the data storing method according to prior art.
FIG. 3 is a block diagram illustrating a data storing method according to the present disclosure.
FIG. 4 is a signal flowchart illustrating an operation of the data storing method according to the present disclosure.
FIG. 5 is a schematic view illustrating a Huffman coding technique configured to compress data rows in the data storing method according to the present disclosure.
FIG. 6 is a graph illustrating a compression code of data rows compressed by Huffman coding technique in the data storing method according to the present disclosure.

### DETAILED DESCRIPTION OF THE DISCLOSURE

Various exemplary embodiments will be described more fully hereinafter with reference to the accompanying drawings, in which some exemplary embodiments are shown. The present inventive concept may, however, be embodied in many different forms and should not be construed as limited to the example embodiments set forth herein. Rather, the described aspect is intended to embrace all such alterations, modifications, and variations that fall within the scope and novel idea of the present disclosure.

Now, exemplary embodiments of the present disclosure will be explained in detail together with the drawings.

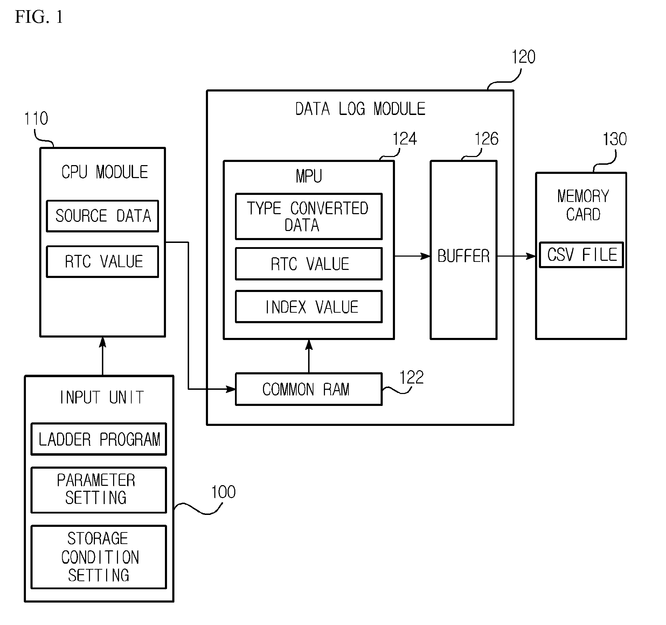

FIG. 1 is a block diagram illustrating a data storing method according to prior art, where reference numeral 100 is an input unit configured to input a ladder program. By way of example, the input unit (100) inputs a ladder program through XG5000 program, and sets by inputting parameters including types for storing log data, file names and index names, and data storage conditions of log data.

Reference numeral 110 is a CPU (Central Processing Unit) module. The CPU module (110) collects, in the form of source data, the log data satisfying the ladder program inputted through the input unit (100), the set parameters and storage conditions, and provides the collected source data along with an RTC (Real Time Clock) value to a data log module (120).
The data log module (120) configured to generate data rows by converting a type of source data provided by the CPU module (110) may include a common RAM (122), an MPU (Micro Processing Unit, 124) and a buffer (126).
The common RAM (122) temporarily stores the source data and the RTC value provided by the CPU module (110). The MPU (124) converts the type of source data stored in the common RAM (122), and generates data rows by adding the RTC value stored in the common RAM and index value to the type-converted data. The buffer (126) stores the data row generated by the MPU (124).

Reference numeral 130 is a memory card. The memory card (130) may use a SD (Secure Digital) memory card or a CF (Compact Flash) memory card, and the memory card may be stored with the data row stored in the buffer (126) in a CSV (Comma Separated Value) format file, for example.

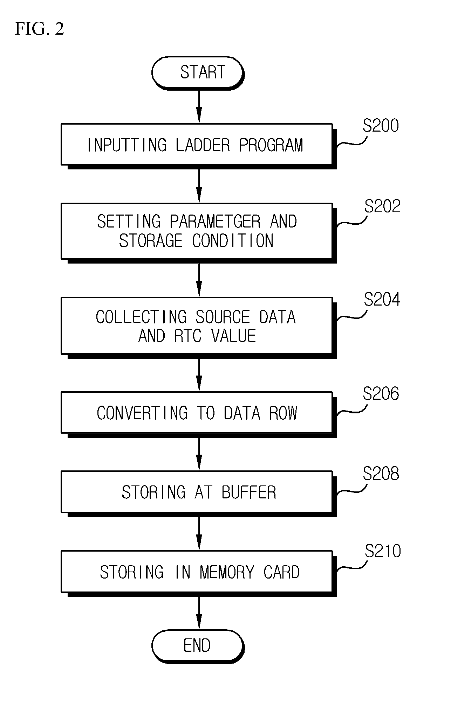

FIG. 2 is a signal flowchart illustrating an operation of the data storing method according to prior art

Referring to FIG. 2, an operator inputs through the input unit (100) by preparing a ladder program (S200), and the input of the ladder program is performed by using an XG5000 program, for example.

Furthermore, setting is made by inputting parameters including a type for storing log data, file name and index name, and storage condition of log data while the ladder program is inputted through the XG5000 program (S202).

Under this condition, the CPU module (110) collects source data in response to the ladder program, the parameters and storage condition, and stores the collected source data along with the RTC value in the common RAM (122) of the data log module (120) (S204). The source data stored in the common RAM (122) is inputted into the MPU (124) and converted to a preset type of data, and converted to data row by being added with the RTC value stored in the common RAM (122) and the index value (S206).

The converted data row is stored in the buffer (126) (S208), and the data row stored in the buffer (126) is stored in the memory card (130) in the form of CSV file (S210).

In the conventional data storing method, the data row stored in the buffer (126) is not compressed, and stored as is in the memory card (130) in the form of CSV file, such that the memory card having a limited storing capacity suffers from difficulty in storing a large capacity of data.

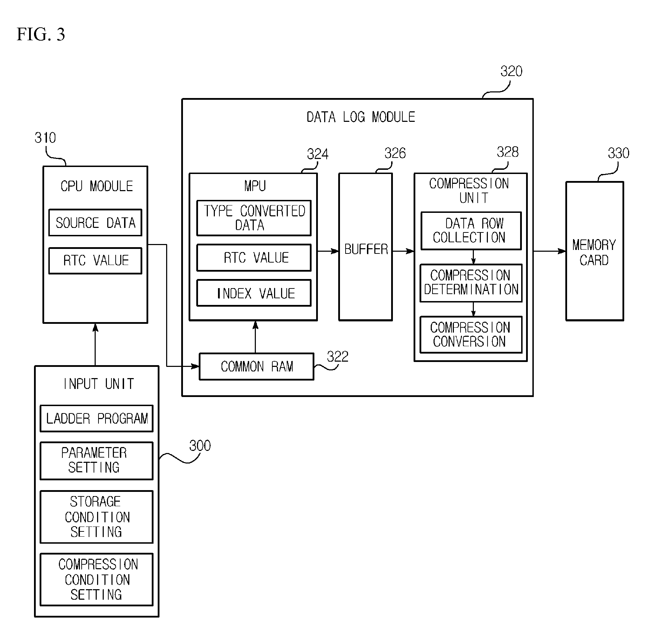

FIG. 3 is a block diagram illustrating a data storing method according to the present disclosure, where reference numeral 300 is an input unit configured to input a ladder program. By way of example, the input unit (300) inputs the ladder program by using an XG5000 program, for example. Furthermore, setting is made by inputting parameters including a type for storing log data, file name, index name, storage condition of log data and compression of data to be stored.

Reference number 310 is a CPU module. The CPU module (310) collects, in the form of source data, the log data satisfying the ladder program inputted through the input unit (300), the set parameters and storage conditions, and provides the collected source data along with an RTC (Real Time Clock) value to a data log module (320).

The data log module (220) configured to generate data rows by converting a type of source data provided by the CPU module (310) may include a common RAM (322), an MPU (Micro Processing Unit, 324), a buffer (326) and a compression unit (328).

The common RAM (322) temporarily stores the source data and the RTC value provided by the CPU module (310). The MPU (324) converts the type of source data stored in the common RAM (122), and generates data rows by adding the RTC value stored in the common RAM (322) and index value to the type-converted data. The buffer (326) temporarily stores the data row generated by the MPU (324).

The compression unit (328) determines whether to compress by collecting data rows stored in the buffer (326), and performs the compression of the collected data rows when the compression is set, and does not perform the compression of collected data rows when the compression is not set.

Reference numeral 330 is a memory card. The memory card (330) may use a SD (Secure Digital) memory card or a CF (Compact Flash) memory card, and stores the data rows compressed or not compressed by the compression unit (328) in a CSV (Comma Separated Value) format file, for example.

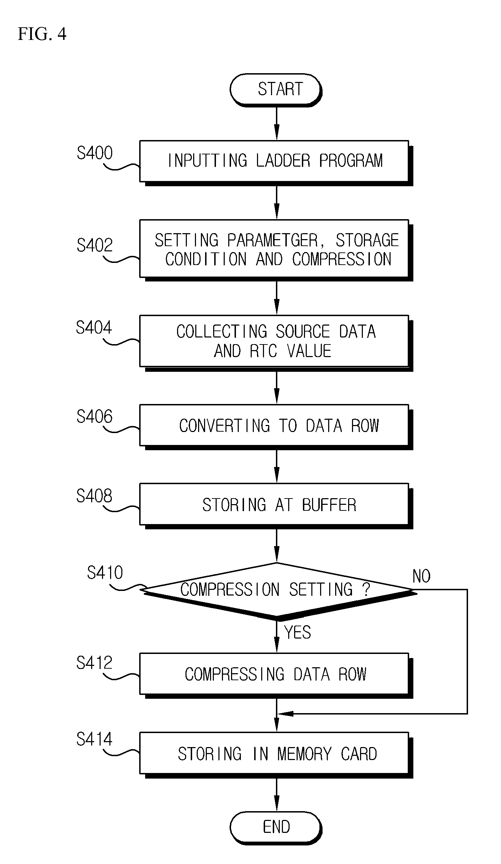

FIG. 4 is a signal flowchart illustrating an operation of the data storing method according to the present disclosure.

Referring to FIG. 4, an operator inputs through an input unit (300) by preparing a ladder program (S400), and the input of the ladder program is performed by using an XG5000 program, for example.

Furthermore, setting is made by inputting parameters including a type for storing log data, file name and index name, storage condition of log data and compression of data while the ladder program is inputted through the XG5000 program (S402).

Under this condition, the CPU module (310) collects source data in response to the ladder program, parameters storage condition compression of data, and stores the collected source data along with the RTC value in the common RAM (322) of the data log module (320) (S404). The source data stored in the common RAM (322) is inputted into the MPU (324) and converted to a preset type of data, and converted to data row by being added with the RTC value stored in the common RAM (322) and the index value (S406).

The converted data row is stored in the buffer (326) (S408), and the data row stored in the buffer (326) is inputted to the compression unit (328). The compression unit (328) collects the data row stored in the buffer (326) to determine whether to compress the collected data row (S410).

As a result of the determination, if the compression of data row is set, the compression unit (328) compresses the collected data row (S412) and stores the compressed data row in the memory card (330) (S414). As a result of the determination, if the compression of data row is not set, the compression unit (328) does not compress the collected data row (S412) and stores the compressed data row in the memory card (330) as is (S414).

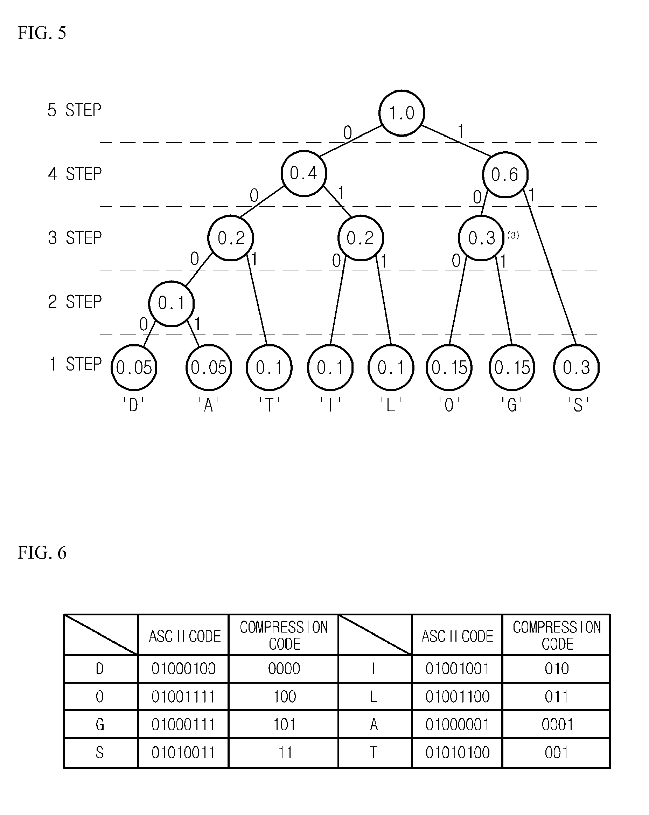

Now, an operation of compression of data row by the compression unit (328) will be described in detail. The compression unit (328) according to the present disclosure performs compression through a plurality of steps by applying Huffman coding technique as illustrated in FIG. 5, for example, by generating a compression code using the data row stored in the buffer (326).

At a first step, frequency number of each data row is checked based on the data row initially stored in the buffer (326), and calculates a probability value according to a checked result. Referring to FIG. 5, samples 'D', 'A', 'T', 'I', 'L', 'O', 'G' and 'S' of the data row are set, and probability values of set samples of the data row are calculated.

At a second step, the calculated probability values of samples in the data row are compared, and as a result of comparison, a new node is generated by adding two smallest probability values.

At third, fourth and fifth steps, a Huffman tree is generated by repeating processes of generating a new node by comparing a probability value of the newly generated node with probability values of samples in remaining data rows and adding the two smallest probability values in size as a result of the comparison.

When only a node with a probability value of 1 remains as in the fifth step, the generation process of Huffman tree is finished and each node is allocated with a bit. As a last process, a left branch from an uppermost node of the Huffman tree is allocated with '0' bit, and a right branch is allocated with '1' bit to generate a compression code.

FIG. 6 is a graph illustrating a compression code of data rows compressed by Huffman coding technique in the data storing method according to the present disclosure, where ASCII codes relative to samples 'D', 'A', 'T', 'I', 'L', 'O', 'G' and 'S' of the data row set in FIG. 5 are compared with compression codes generated by the present disclosure.

As a result of the comparison, if the samples 'D', 'A', 'T', 'I', 'L', 'O', 'G' and 'S' of the data row are stored in ASCII codes, 64 bits are required. However, if the samples 'D', 'A', 'T', 'I', 'L', 'O', 'G' and 'S' of the data row are stored by compression according to the present invention, only 33 bits are required. Although the present disclosure has explained and illustrated the compression and storage of data rows in the memory card according to Huffman coding technique, the present disclosure is not limited thereto, and the compression and storage of data rows in the memory card may be stored using various other techniques.

Although the present disclosure has been described with reference to a number of illustrative embodiments thereof, it should be understood that numerous other modifications and embodiments can be devised by those skilled in the art that will fall within the spirit and scope of the principles of this disclosure.

## Claims

1. A method for storing data, the method **characterized by**:
collecting, by a CPU (Central Processing Unit) module (310), a source data and an RTC (Real Time Clock) value and storing the source data and the RTC value in a common RAM (Random Access Memory, 322) of a data log module (320);
converting, by an MPU (Micro Processing Unit, 324) of the data log module, a type of the source data, and adding the RTC value and an index value to the converted value to generate a data row; and
compressing, by a compression unit (328) of the data log module (320), the generated data row, and storing the generated compressed data row in a memory card (330).

2. The method of claim 1, further **characterized by**: inputting a ladder program through an input unit (300) and setting a parameter and a storing condition prior to storing the data log module (320) in the common RAM (322), wherein the CPU module (310), at the step of storing at the common RAM (322) of the data log module (320), collects a source data and an RTC value satisfying the parameter and the storing condition.

3. The method of claim 1 or 2, **characterized in that** the step of storing the generated compressed data row in the memory card (330) includes storing the generated data row in a buffer (326), and storing in the memory card (330) by allowing the compression unit (328) to compress the data row stored in the buffer (326).

4. The method of any one claim of 1 to 3, further **characterized by**: setting whether to compress through the input unit (300), prior to the step of storing in the common RAM (322) of the data log module (320), wherein the compression unit (328) determines setting of whether to compress at the step of storing in the memory card (330), and stores in the memory card (330) by compressing the data row when the compression is set.

5. The method of any one claim of 1 to 4, **characterized in that** the step of storing in the memory card (330) includes generating a Huffman Tree using the data row according to Huffman coding technique, generating a compression code by selectively providing 0 or 1 to a left branch and a right branch of the generated Huffman tree, and storing the compressed code in the memory card (330).

6. The method of claim 5, **characterized in that** the step of generating the Huffman tree includes checking the frequency number of each data row based on the data row and calculating probability values as a result of the checking, comparing the probability values of samples of the calculated data row, and repeating the processes of generating a new node by comparing a probability value of the newly generated node with probability values of samples in remaining data rows and adding the two smallest probability values in size as a result of the comparison.
